(19) Europäisches Patentamt
European Patent Office
Office européen des brevets

(11) **EP 2 458 542 A1**

(12) **EUROPEAN PATENT APPLICATION**

(43) Date of publication:
**30.05.2012 Bulletin 2012/22**

(51) Int Cl.:
***G06Q 10/06*** *(2012.01)*

(21) Application number: **11178643.0**

(22) Date of filing: **24.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **25.11.2010 JP 2010261904**

(71) Applicant: **Hitachi Ltd.**
**Tokyo (JP)**

(72) Inventor: **Teramoto, Kazuyoshi**
**Chiyoda-ku, Tokyo 100-8220 (JP)**

(74) Representative: **Calderbank, Thomas Roger et al**
**Mewburn Ellis LLP**
**33 Gutter Lane**
**London**
**EC2V 8AS (GB)**

(54) **Environment load decision system and environmental load data management device**

(57) Environmental load on a supply chain is connected to not only design information and past statistical information but business process being implemented to thereby obtain product load relation information being implemented to be reflected, so that detailed management is performed for each product. Thus, environmental load can be suppressed from being increased on the way of process. Further, this function is provided with mutual information screening function to be realized on ICT system utilized jointly so that a lot of users can use this function easily. Parameters and contents required in environment management can be provided by system manager, so that product environmental load management reflecting latest environment science and result of law can be attained without burdening users with heavy load.

## FIG. 2

**Description**

The present invention relates to a system and devices related thereto which perform measurement and management of environmental (ENV) loads of products of plural kinds on a supply chain used by plural users jointly.

In the Life Cycle Assessment (LCA) method in which environmental loads produced by products over the life cycle of the products are measured and managed, a method of summarizing information concerned in LCA for each product to be integrated in a batch is the mainstream in the prior art. Further, the computer system used is also an offline system that does not directly exchange information with the process in which products flow actually. Accordingly, the environmental load over the life cycle of the product obtained in the prior art represents average numerical value of the product although it does not reflect information of each of particular products faithfully. In the technique obtaining environmental load unit described in JP-A-2006-195916, all of necessary data are collected and a hypothesis defining the collected data as population is built up to be restored to simultaneous equations and calculate the solution.

On the other hand, outsourcing in which the process of business is entrusted externally is extensively performed, so that processes on a supply chain are used by plural entrepreneurs jointly and the same processes treat different products of plural kinds. Accordingly, as viewed from the request side, it is getting difficult in the conventional method to exactly grasp the environmental load information of a particular product of its own company. Energy load in case where plural products are manufactured by the same facilities and energy load in case where plural entrepreneurs jointly transport products of plural kinds must be proportionally divided while deciding an indicator beforehand.

Moreover, IT system which calculates environmental load over the life cycle of product to be managed is widely used offline and further, in most cases, a dedicated system is provided in each entrepreneur to make calculation. It is not constructed so that the entrepreneurs which use the same processes jointly at the same time can calculate and grasp the environmental load of product under the same condition and environment. This cannot be also realized by the technique described in JP-A-2006-195916.

Furthermore, recently, a service form named SaaS in which the same IT system resources are used jointly to utilize the function of the IT system spreads and is also used to calculate the environmental load of the life cycle of product, although it is not connected to target process and cannot reflect the results of environmental load produced on the current supply chain similarly to conventional dedicated system.

Moreover, the environmental load of product is not grasped in real time that is linked to progress of business and accordingly when the possibility that the environmental load of product is increased during processing or in business process subsequent thereto is found out, proper measures for preventing increased load cannot be taken extemporaneously.

As described above, it is not realized at the present time that the environmental loads of products of plural kinds are grasped properly on the supply chain. Accordingly, there is not provided measures for preventing increase of environmental load minutely in accordance with real operation.

The subjects to be solved by the present invention are to properly grasp environmental loads over life cycles of individual products in the situation that it is generalized that plural entrepreneurs use plural facilities and processes on the supply chain at the same time and perform operations of plural products such as manufacturing, sale, maintenance, disposal and the like and concretely are as follows:

(1) To grasp operation situations of each facility and process on supply chain and grasp environmental load belonging to each product properly;
(2) To realize the function described in (1) by a jointly used system instead of the dedicated IT system, so that user's load is reduced and accuracy of grasped contents is improved;
(3) To make it possible to verify environmental load information of each product grasped in (2); and
(4) To provide the function that subsequent process contents and process order may be changed to suppress increase of the environmental load when the possibility that environmental load of product (commodity) being treated is increased in actual business on the supply chain is found out.

Means for solving the subjects may perform the following processing:

(1) To grasp individual specifications concerned in environmental load of facilities and processes on supply chain;
(2) To grasp information of raw materials, components, component composition and production procedure of products;
(3) To measure result values of consumption energy and generated chemical substances produced in facilities and processes when individual products are manufactured, transported, sold, used, maintained and disposed/recycled actually on the supply chain;
(4) To communicate the result values to environmental information collection and management server through network;

(5) To obtain environmental loads on the supply chain belonging to individual products by performing proper judgment processing and operation processing while combining measured values from facilities and processes on the supply chain, identification and state of individual products which move among facilities and processes on the supply chain and change forms and places and information of related facilities, processes, specifications of individual products and various factors, acquisition time of information and the like; and

(6) To provide measures or information to check possibility of increasing environmental load in the process of performing the processing of (5) and suppress increase of environmental load in present and subsequent processes or further reduce environmental load as compared with plan.

The above measures 1) to 6) can be performed to thereby understand amount of environmental load produced in facilities and processes on the supply chain and belonging to each product.

According to the present invention, environmental load produced on the supply chain can be managed even by environmental information collection management server in function service form utilized by plural users jointly.

IN THE DRAWINGS:

Fig. 1 is a schematic diagram illustrating hardware configuration of an environmental information management server;

Fig. 2 is a schematic diagram illustrating software function of the environmental information management server;

Fig. 3 is a diagram illustrating grasp of environmental load characteristics of individual facilities and processes;

Fig. 4 is a schematic diagram illustrating the whole configuration of a first embodiment for carrying out the present invention;

Fig. 5 is a diagram showing a flow of environmental load relation information in the first embodiment for carrying out the present invention;

Fig. 6 is a diagram showing a method of separating environmental loads into individual products in the first embodiment for carrying out the present invention;

Fig. 7 is a diagram showing a method of separating facility loads into individual products in the first embodiment for carrying out the present invention;

Fig. 8 is a schematic diagram illustrating the whole configuration of a second embodiment for carrying out the present invention;

Fig. 9 is a diagram showing a flow of environmental load relation information in the second embodiment for carrying out the present invention; and

Fig. 10 is a diagram showing a method of separating environmental loads into individual products in the second embodiment for carrying out the present invention.

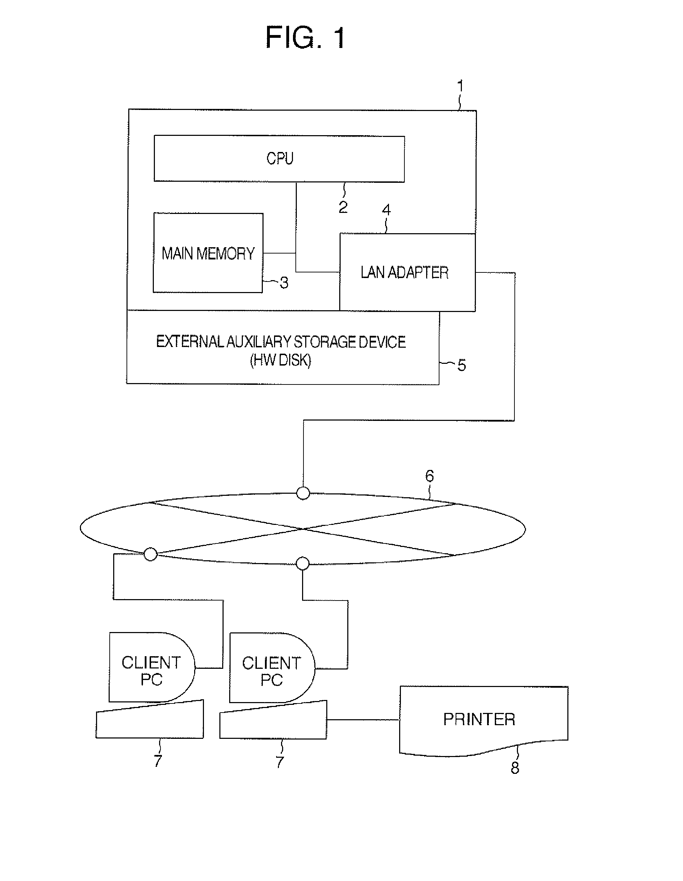

Referring now to Figs. 1 to 3, technical elements common to two embodiments of the present invention described below are described.

Fig. 1 schematically illustrates hardware configuration related to an environmental management server. A server 1 includes a central processing unit (CPU) 2, a main memory 3, a LAN adapter 4 and an external auxiliary storage device 5 and is connected to a network 6 through the LAN adapter 4. The network may be the Internet or Intranet which can transmit and receive information by means of TCP/IP protocol generally in most cases although when servers and clients are connected to each other at all times and information can be transmitted and received therebetween even if another configuration and protocol are used, the same operation can be performed.

One or more client personal computers (PC) 7 are connected to the network 6 and there is also a case where a printer 8 is connected to certain client personal computer (PC) 7.

In operation, client personal computer (PC) 7 inputs environmental information of a post which the client personal computer 7 serves and the environmental information is stored in a relational database provided in the external auxiliary storage device 5 constituting the environmental information management server 1 after being subjected to a predetermined procedure. When a report is outputted or when environmental information is estimated, a request is received from client personal computer (PC) 7 of the post requiring it, so that software having function pertinent thereto is operated by the central processing unit and obtained result is sent to the client personal computer (PC) 7 of request source.

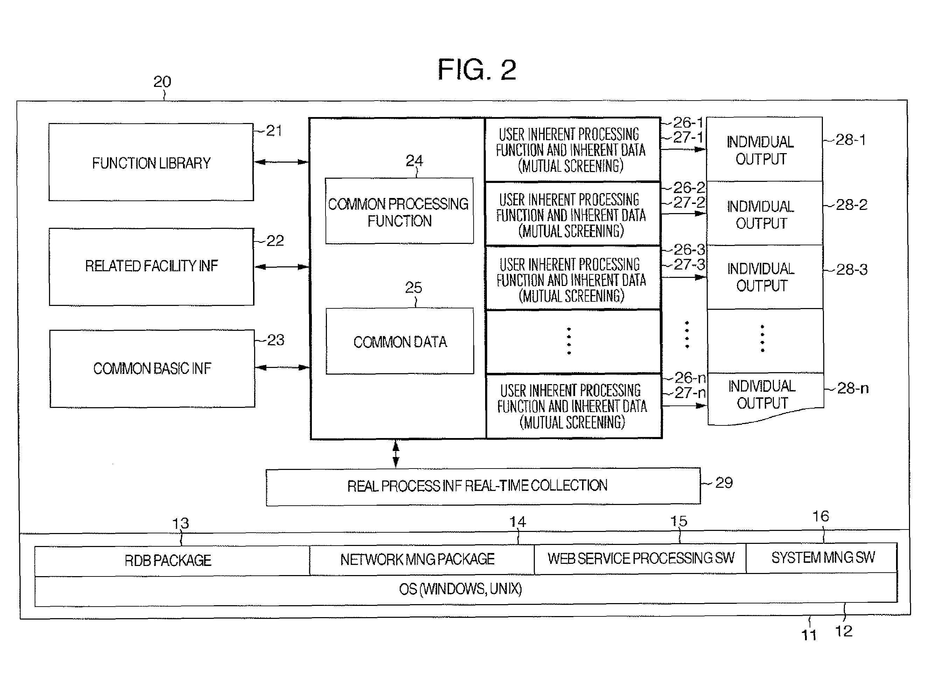

Fig. 2 illustrates functional configuration of software for realizing such function as the environmental information management server. Software configuration of the environmental information management server is divided broadly into two parts to be described.

A basic part 11 of server system is first described. This part is a necessary part regardless of the kind of service when IT system is constructed as server. The fundamental operating system (OS) 12 uses a very versatile system such as Windows (registered trademark) and Unix (registered trademark). It is a matter of course that there is no problem when operation of computer system and resource management can be implemented with consistency even if quite different unique system is used.

The operating system 11 implements relational database (RDB) package 13 which takes partial charge of file management function, network management (MNG) package 14 which manages the network, system management (MNG) software (SW) 16 which manages the whole resources of the server and Web service processing software (SW) 15 which performs data display and taking-in of key input between client and the system and constitutes presupposition function as an environment method management server. All of them are very versatile software group which can realize the presupposition function of the server system.

Then, application part 20 having function required as environment management server is added on the basic part 11. The server 1 is used by plural users independently at the same time. Software group of basic part 11 has the function of operating plural software mutually without inconsistency, although the parallel processing function is effective for software but not effective for function required by plural users. In contrast, the application part is designed and implemented to have the function required by plural users and the function of screening information independently so that reference and writing of inherent data cannot be made between users. In Fig. 2, the case where the number of users is n is described.

As data referred to by each user in common, there are related facility information (INF) 22 concerning facility utilized jointly, environmental information management common basic information (INF) 23 (for example, environmental load or the like such as $CO_2$ generation conversion value of consumed power corresponding to the operating rate when a certain particular facility is operated) and variable common data 25 such as facility operation plan. Further, common processing function 24 which performs common processing to each user and common function library 25 belong to common part. In addition thereto, real process information real-time collection 29 for collecting operation situations of real processes (facilities and devices) utilized by each user jointly and information concerning products passing therethrough and the like in real time, user inherent processing functions 26-1, 26-2, ..., 26-n used by each user individually and inherent data 27-1, 27-2, ..., 27-n such as information concerning products of its own company are implemented and individual output functions 28-I, 28-2, ..., 28-n for report and the like are also provided for each user. These inherent processing functions and inherent data have software structure in which they are screened mutually and cannot be referred to and written in.

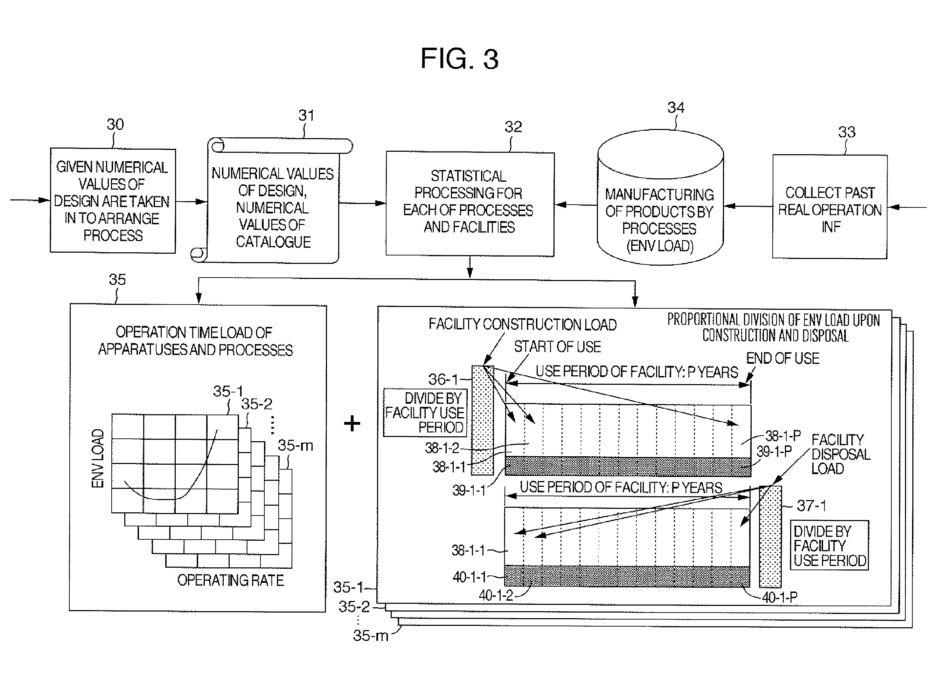

Fig. 3 is a diagram for explaining a method of grasping individual environmental load characteristics of facilities and processes by environment management information service. The environmental load characteristics of facilities and processes are information required to calculate environmental load such as $CO_2$ generated by processing on the basis of operating rate and operation time when each user uses the facilities and processes to perform the processing such as manufacturing and movement of products.

These pieces of information are obtained in accordance with procedure. First, numerical values of design for apparatuses constituting facilities and processes are arranged (Step 30) and numerical values of design concerning environmental loads produced by operation, such as rated consumed power, operation load consumed power related information, standard fuel consumption and the like, are obtained (step 31).

Further, when facilities and processes similar to the facilities and processes concerned were operated in the past, past operation information is collected (step 33) and numerical values of results concerned in environmental (ENV) loads produced by operation are obtained therefrom (step 34) similarly to the case where information is obtained from numerical values of design. These two kinds of environmental load characteristic data are subjected to processing 32 such as calculation of weighted average in consideration of importance and operation time load characteristics 35-1, 35-2, ..., 35-n of apparatuses and processes of m kinds are obtained.

Moreover, in order to improve the accuracy of loads of products manufactured and moved by using the facilities and processes, the following processing is performed so that environmental load produced by construction of the facilities and processes and disposal after elapse of the life is also reflected to characteristics. First, environmental loads (design value or results) produced upon construction of the facilities and processes are divided by p years during which the facilities are used (actually, divided by time unit during p years) to be added to operation time load of the facilities and processes. Similarly, environmental load produced by disposal after use period ofp years elapses is also added thereto. Thus, related load except load produced upon operation can be added to thereby improve accuracy of environmental load belonging to product. Environmental load produced by maintenance checkup and repair can be also added in addition to environmental load upon construction and disposal of facilities and processes.

<FIRST EMBODIMENT>

As an aspect for implementing the present invention, grasp of environmental loads of products in business place of foundry which performs business in which production trust is accepted from plural entrepreneurs and plural products are produced by common facilities from among facilities and processes constituting the supply chain is described.

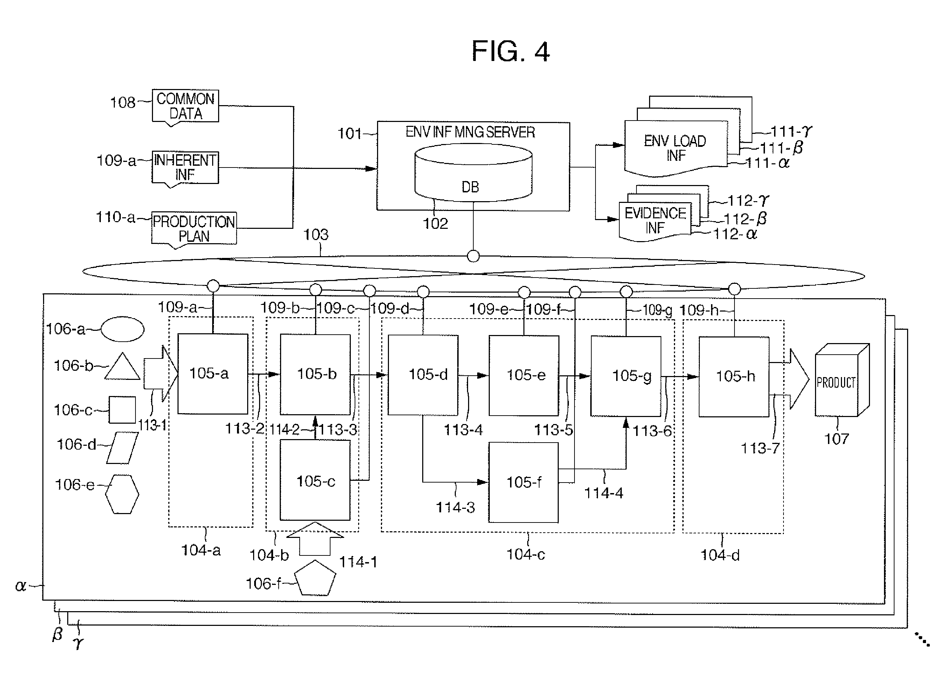

Fig. 4 illustrates the whole configuration of the embodiment. A database 102 is provided in an environmental (ENV) information (INF) management (MNG) server 101 and necessary information is stored in the database. The environmental information management server includes central processing unit, main memory, hardware storage device, console input/output unit for operation, Ethernet connection adapter and printer as hardware configuration. Further, software configuration includes operating system such as Windows (or UNIX (registered trademark)), relational database management package for database management, network management package, environmental information management package, common data, user inherent data and the like.

Common data 108 such as common basic information on the facilities used for the foundry business (for example, numerical values representing characteristics of the facilities such as rated power, relation of operating rate and consumed power, standard fuel consumption, processing ability and the like), environmental load calculation parameters (for example, parameter for converting electric energy into $CO_2$ generation amount), inherent information (component environmental load information, component list information, manufacturing method and the like) 109-$\alpha$ (for products $\alpha$), 109-$\beta$ (for products $\beta$) ... classified by entrepreneurs and products, production plans 110-$\alpha$ and 110-$\beta$ classified by products and the like are previously stored in the environmental information management server individually. Individual data are blocked by software so that the data cannot be referred to among entrepreneurs. Here, "component environment information" represents environmental load until component supplied externally is manufactured as the component and is supplied when the product is manufactured. Further, "component list information" represents the kind and the number of components required to assemble the product and is named BOM (Bill of Material). Environmental load of component used can be reflected to the product by this two kinds of information.

On the other hand, each product is processed and assembled as product while passing through process composed of facilities in foundry. These processes and procedures are different for each product. On the assumption that interference exclusion and the like among products are solved by proper measure from the feature of the present invention, the case of product $\alpha$ is described in detail and the procedure of obtaining individual environmental loads is also described by taking the product $\alpha$ as an example.

The product $\alpha$ is composed of components 106-a, 106-b, 106-c, 106-d, 106-e and 106-f and passes through process 104-a (including facility 105-a), process 104-b (including processes 105-b and 105-c), process 104-c (including facilities 105-d, 105-e, 105-f and 105-g) and process 104-d (including facility 105-h) to be a finished product 107.

Detailed description is made below.

First, components 106-a, 106-b, 106-c, 106-d and 106-e are fed to process 104-a through route 113-1. The components are assembled to a predetermined state in facility 105-a and fed to process 104-b through route 113-2. Here, the components fed to process 104-b are combined with component 106-f fed to process 104-b through route 114-1 and processed by facility 105-c by means of facility 105-b. Then, the combined components are fed to facility 105-d of process 104-c through route 113-3. The combined components fed to facility 105-d are divided into two parts and one of them is fed to facility 105-e through route 113-4 to be processed and then fed to facility 105-g through 113-5. The other is processed by facility 105-f through route 114-3 and fed to facility 105-g after passing through route 114-4. Both of them are assembled into one by facility 105-g and then fed to facility 105-h of process 104-d through route 113-6. After the components fed to facility 105-h are processed, the components pass through route 113-7 to be the finished product 107.

Pieces of information 109-a, 109-b, 109-c, ..., 109-h concerned in facility operation and product movement are obtained from the facilities of the processes in real time and stored in database (DB) 102 of the environmental information management system 101 through network 103. The flow of these data is the same for other products $\beta$, $\gamma$ ... and all information obtained is stored in database 102. Information concerned in processes 104-a, b ..., facilities 105-a, 105-b ... and finished product 107 are treated to be blocked or screened mutually in software manner so that only entrepreneur of product $\alpha$ can refer to the information. This is the same for other products $\beta$, $\gamma$ ...,

The stored data are classified and allocated for each product by environment management server 101 in the environment in which information is screened for each entrepreneur and are offered to respective entrepreneurs as environmental load information 111-$\alpha$ (in case of product $\alpha$), 111-$\beta$ (in case of product $\beta$) ... for each product. Furthermore, the process of classification and allocation and information used are stored together with results and offered as evidence information 112-$\alpha$, 112-$\beta$, 112-$\gamma$ ... of respective product environmental loads to be able to be used for later confirmation and verification by third party. The new environment restriction Eup (Proposal for a DIRECTIVE on establishing a framework for the setting of Eco-design requirement for Energy Using Products) of EU which is supposed to be enforced in near future can be treated.

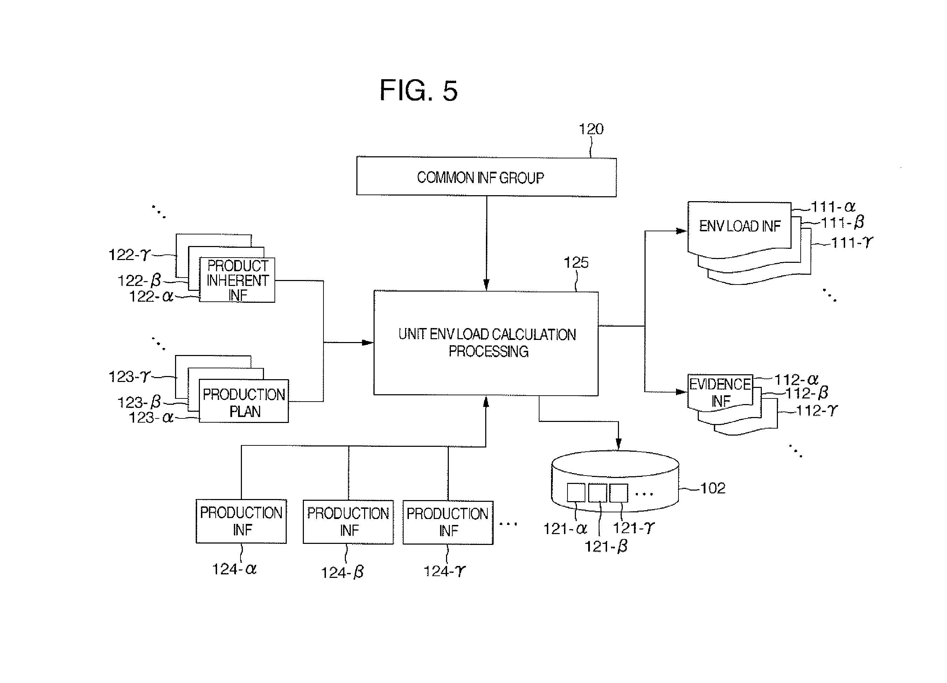

Fig. 5 shows a flow of environmental load information for realizing the embodiment. The flow of information in the embodiment until environmental loads of individual products are obtained in foundry business place in which plural products of plural entrepreneurs are processed and assembled in parallel is as follows. Information used in processing includes information group 120 (corresponding to common data 108 of Fig. 4) common to all products to be produced or all entrepreneurs utilizing the foundry, such as rated consumed power of facilities and conversion coefficient for converting environmental load into $CO_2$ amount, environmental load information of components for each product and component list information, product inherent information 122-$\alpha$, 122-$\beta$, 122-$\gamma$ ... (corresponding to inherent information 109-α, 109-β ... classified by entrepreneurs and products of Fig. 4) containing manufacturing method information and the like and production plans 123-α, 123-β, 123-γ ... of the products (corresponding to production plans 110-α, 110-β ... classified by products of Fig. 4) which are inputted in the early stage and is inputted to unit environmental load calculation processing 125 for each of products and environmental information classification together with information 124-α, 124-β, 124-γ ... obtained when processing and assembling are made, such as real product identification information and production result information. Environmental load per unit quantity of each product can be calculated by the above processing. Results thereof are stored in respective product information files 121-α, 121-β, 121-γ ... of the database 102.

Information stored in database is offered to pertinent entrepreneur as unit environmental load information 111-α, 111-β, 111-γ ... for each product if necessary and pieces of information 112-α, 112-β, 112-γ ... of basis from which environmental load values are calculated are also offered in the same form if necessary.

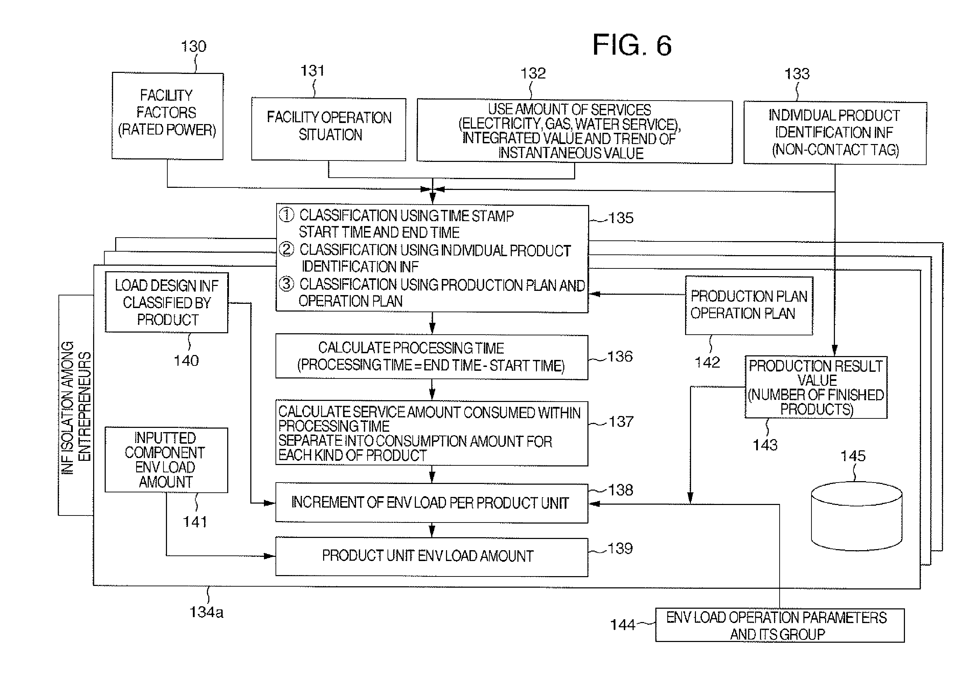

Referring now to Fig. 6, a separation method of environmental loads into individual products for realizing the embodiment is described.

(1) Facility factors (rated power and the like) 130 that is fixed information, facility operation information 131 within fixed time that is variable information upon operation and information 132 containing integrated value of amount used of services (electricity, gas, water service and the like) and trend of instantaneous value are taken in. Each time each product passes through each facility, product identification information 133 is obtained.

(2) The products using each facility are classified on the basis of the taken-in information (135). The classification contains classification of facility use products using time stamp and classification of facility use products using product identification information. Individual product considered that each facility is used within the time zone is indexed on the basis of production plan and operation plan 142.

(3) Next, in 136, time (processing time) that each product is processed in the facility is obtained.

(4) The number of processed products (number of finished products in final process) 143 is obtained on the basis of individual product identification information.

(5) The amount of service used in the operation time of facility is obtained from time and hour that individual product is used and the amount of service for consumption per product (environmental load increased amount) is obtained from the number of products processed within the time. Further, environment load parameters and its group 144 are used to convert the service amount into $CO_2$ generation amount.

(6) When the processing of (5) is performed, increment of environmental load is checked on the basis of environmental load design information at the design stage of the product.

(7) Environmental load amount 141 provided in component inputted to construct the product is added to calculate product unit environmental load amount 139 of the product.

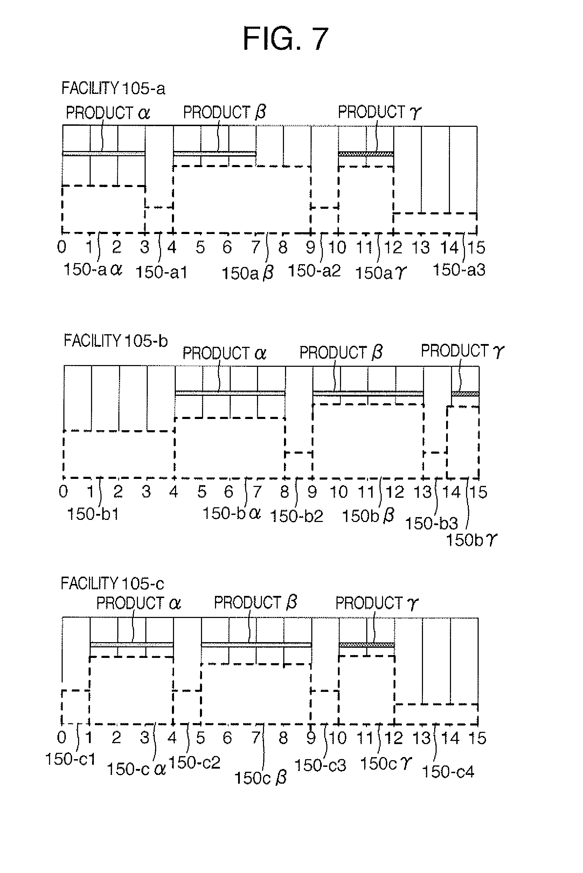

Referring now to Fig. 7, allotment of loads obtained from facilities of products sharing facilities in step 105 is described.

(8) When products α, β and γ are processed and assembled by facilities 105-a, 105-b and 105-c on respective schedules shown in Fig. 7, data of pertinent parts are calculated from loads 150-aα, 150-aβ, 150-aγ, ..., 150-cγ on the basis of product identification information from service use results of respective facilities. The horizontal axis represents time.

(9) Service is consumed even in time zone that product is not processed and assembled and it is recognized as facility idle time energy consumption 150-a1, 150-a2, ..., 150-c4. The idle time energy consumption is proportionally distributed by design energy consumption amount of each product to be allocated to each product. In the following equations, [product x] means the energy consumption amount of product x.

[product α]=150-aα+150-bα+150-cα
+proportional division amount of consumed energy upon idling of facility

[product β]=150-aβ+150-bβ+150-cβ
+ proportional division amount of consumed energy upon idling of facility

[product γ]=150-aγ+150-bγ+150-cγ
+ proportional division amount of consumed energy upon idling of facility

proportional division amount of consumed energy upon idling of facility
=ΣΣ 150ij×load design value of product α/Σload design value

Thus, belonging to product of energy load produced in facilities within a fixed period is decided. The same processing can be performed to even other processes and products in the same time zone to thereby decide belonging environmental load (in this case, energy consumption amount) of all products.

<SECOND EMBODIMENT>

As an aspect for implementing the present invention, grasp of environmental loads of products in business place of transportation entrepreneur which performs business in which transportation trust is accepted from plural entrepreneurs and plural products are transported by common facilities from among facilities and processes constituting the supply chain is described.

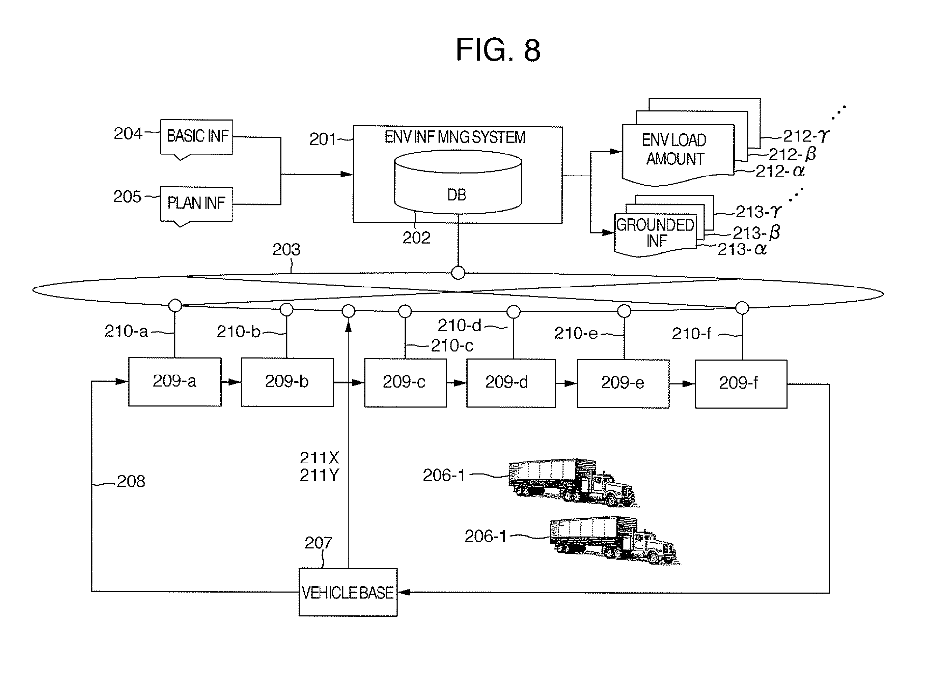

Fig. 8 illustrates the whole configuration of the embodiment.

Vehicles 206-1, 206-2 ... which take charge of transportation run around plural business places 209-a, 209-b, 209-c, ..., 209-f of plural entrepreneurs on predetermined transportation route starting from vehicle base 207 and freight is loaded on the vehicles or unloaded from the vehicles. In the embodiment, the case where one vehicle is operated is described, although the vehicles may be plural or single in number. In order to obtain transportation loads of individual products (commodities), basic information (INF) 204 (environmental loads such as energy used until vehicle used is completed) and plan information (INF) 205 concerned in transportation of vehicle (route map, sending source and sending destination of commodities, quantity, weight and gross weight containing distance information between business places and the like) are previously stored in database 202 of environmental information management server 201. Terminals of business places transmit arrival time and departure time to each of business places 209-a, 209-b, 209-c ... in case where vehicles perform transportation business actually to environmental information management server 201 through network 203. Further, vehicles are returned to vehicle base after vehicles run around all business places on route 208, although at this time information related to distance covered 211-x and consumed fuel 211-y is sent to environmental information management server 202 through network 203 similarly.

There is a case where vehicle base of departure and vehicle base of arrival are different because of vehicle operation, although in this case if distance covered 211-x and consumed fuel 211-y on transportation route can be grasped, environmental load information can be calculated in accordance with processing described later.

Environmental (ENV) load amounts 212-α, 212-β, 212-γ ... for products (commodities) are calculated by environmental information management server 201 on the basis of the information collected above and information and intermediate data used when environmental load amounts are obtained are stored as pieces of grounded information (INF) 213-α, 213-β, 213-γ .... In the environmental information management server 201, information concerned in products and entrepreneurs stored in database 202 is blocked in software manner and entrepreneurs cannot refer to information belonging to other entrepreneurs.

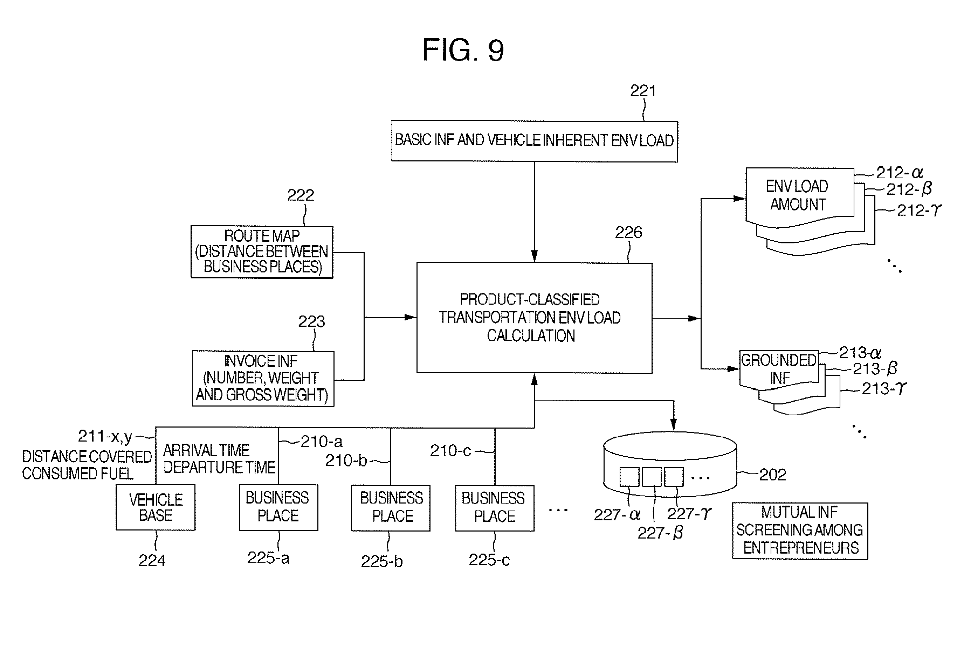

Fig. 9 shows a flow of environmental load information for realizing the embodiment. Product (commodity-classified) transportation load calculation processing 226 is implemented in environmental information management server 201 and is supplied with basic information 221 such as vehicle inherent environmental load, route map (distance between business places and the like) information 222, information 223 of invoice (number, weight, gross weight, sending destination and sending source of products (commodities)) and information of arrival time and departure time 210-a, 210-b, 210-c ... of business places 225-a, 225-b, 225-c ... obtained upon actual transportation to be divided into individual environmental load amount. Consequently, product (commodity) classification environmental load amounts 212-α, 212-β, 212-γ ... and pieces of grounded information 213-α, 213-β, 213-γ ... are outputted but are classified for each of products (commodities) to be managed as 227-α, 227-β, 227-γ ... and screened from information of other entrepreneurs in the database 202.

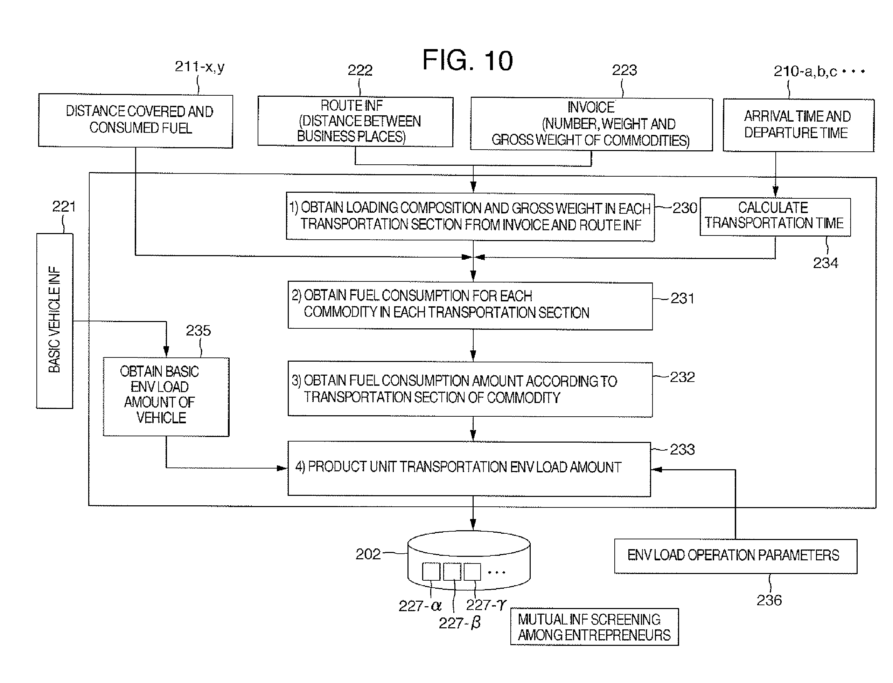

Fig. 10 shows a method of separating environmental loads into individual products for realizing the embodiment.

A method of obtaining individual transportation loads of individual products (commodities) transported by joint transportation is described.

(1) First, product (commodity) loading weight and gross weight in each transportation section are obtained on the basis of distance between business places of route information 222 and number, weight, gross weight, sending source business place and sending destination business place of products (commodities) in invoice 223 for each product (commodity) (step 201). Since products are loaded and unloaded in each business place, gross weight of products (commodities) in each transportation section is changed.

(2) Then, fuel consumption amount for each product (commodity) in each transportation section is calculated in accordance with the following procedure on the basis of distance covered 211-x, consumed fuel 211-y and arrival time and departure time 210-a, 210-b, 210-c ... at business places obtained when vehicles run around all business places on route and returned to vehicle base 207 (step 202).

First, consumed fuel is separated for each transportation section (step 203). Section from vehicle base 207 to business place 209-a is defined to be 208-a, section from business place 209-b to business place 209-c be 208-b ... and section from business place 209-f to vehicle base 207 be 208-x. When vehicle runs along route map, distance of route on map is defined to be d (route) and the total length D of route 208 is calculated.

$$D(208)=\sum d(209\text{-}i)\text{:}\{i\text{=}a\text{~}f\}\text{+}d(209\text{-}x)\text{=}212\text{-}x \qquad \ldots \text{(expression 1)}$$

Actually, there is traveling error. Accordingly, distance covered result 212-x is divided into actual distance covered D() for each section as follows:

$$D(209\text{-}i)\text{:}\{i\text{=}a\text{~}f\}\text{=}(212\text{-}x)\times d(209\text{-}i)\text{:}\{i\text{=}a\text{~}f\}/d(208) \qquad \ldots \text{(expression 2)}$$

$$D(209\text{-}x)\text{=}(212\text{-}x)\times d(209\text{-}x)/d(208) \qquad \ldots \text{(expression 3)}$$

Actual distance covered for each section is calculated. This distance is weighted by traveling time. The purpose of weighting is to reflect difference in efficiency of fuel consumption between section where vehicle travels smoothly and section where vehicle does not travel smoothly to environmental load estimation.
Consumed fuel in each section is expressed by F(209i : {i=a~f, x}) and traveling time for each section is calculated by the following expression;

$$T(209i\text{:}\{i\text{=}a\text{~}f,\ x\})\text{=}\text{arrival time} - \text{departure time of last business place}$$
$$\ldots \text{(expression 4)}$$

Weighting coefficient W for each section is expressed by the following expression:

$$W\text{=}[D(209i\text{:}\{i\text{=}a\text{~}f,x\})/T(209i\text{:}\{i\text{=}a\text{~}f,\ x\})]$$
$$\div[\textstyle\sum D(209i\text{:}\{i\text{=}a\text{~}f,\ x\})/(\sum T(209i\text{:}\{i\text{=}a\text{~}f,\ x\}] \qquad \ldots \text{(expression 5)}$$

This is a ratio of velocity for each section and average velocity and the smaller the numerical value thereof is, the worse the traveling efficiency is. This coefficient is used to divide fuel used into fuel used in each section.

$$F(209i\text{:}\{i\text{=}a\text{~}f,\ x\})\text{=}\text{consumed fuel}(211\text{-}y)\times D(209i\text{:}\{i\text{=}a\text{~}f,\ x\})$$
$$\div W(209i\text{:}\{i\text{=}a\text{~}f,\ x\}) \qquad \ldots \text{(expression 6)}$$

Next, fuel consumption amount for each commodity in each transportation section is calculated.
Since the fuel consumption amounts F(209i: {i=a~f, x}) of vehicles in respective sections are calculated as above, the fuel consumption amounts are divided into fuel for each product (commodity) loaded in the section. What products (commodities) are loaded in respective transportation sections is indexed or detected from invoice. Whether the product (commodity) is loaded or not in the section can be identified on the basis of sending source and sending destination. Fuel consumption amount in the section obtained above is classified on the basis of the ratio of weight of all products (commodities) loaded in the section and weight of the product. When fuel consumption amount for each product (commodity) in the section is expressed as Fp(209i : i=a~f, x, $\alpha$, $\beta$, $\gamma$ ...) and gross weight (containing package) of the product (commodity) is Wp ($\alpha$, $\beta$, $\gamma$ ...), the fuel consumption amount is expressed by the following expression:

$$Fp(209i: i=a\sim f,x,\alpha,\beta,\gamma\ldots)=F(209i:i=a\sim f,x)$$
$$\times FWp(\alpha,\beta,\gamma\ldots)/\sum Wp(\alpha,\beta,\gamma\ldots) \qquad \ldots \text{(expression 7)}$$

(3) Since fuel consumption amount in each transportation section of each product is calculated, total fuel consumption amounts Fp($\alpha$), Fp($\beta$), Fp($\gamma$) ... for sections where commodities are transported are calculated.

$$Fp(\alpha)=\sum Fp(209i:i=a\sim f,x,\alpha) \qquad \text{(expression 8)}$$

$$Fp(\beta)=\sum Fp(209i:i=a\sim f,x,\beta) \qquad \text{(expression 9)}$$

$$Fp(\gamma)=\sum Fp(209i:i=a\sim f,x,\gamma) \qquad \text{(expression 10)}$$

(4) The fuel consumption amounts Fp($\alpha$) ... for products (commodities) obtained above are converted into environmental load amount using environmental load operation parameter and environmental load amount inherent in vehicle is added thereto. Further, the added value is divided by products transported (number of commodities) to obtain unit transportation load of product (commodity).

The environmental load amount inherent in vehicle is defined to a value obtained by dividing environment load required to manufacture the vehicle by the life of vehicle and further dividing its quotient by number of kinds of commodities transported on that day.

The unit environmental load amounts for respective products (commodities) calculated in (1) to (4) are stored in environmental load files 227-$\alpha$, 227-$\beta$, 227-$\gamma$ ... for respective products (commodities) of database 202 screened mutually among business places. At the same time, grounded input information and primary intermediate calculation values are stored for verification in future.

## Claims

1. An environmental load data management device (1) which manages environmental load information which is information which facilities and apparatuses give to environment, comprising:

   a communication part (4) to receive information about plural products ($\alpha$, $\beta$, $\gamma$) manufactured by facilities and apparatuses and environmental load information indicating energy information at time that the products are processed from facilities and apparatuses; and
   contribution rate decision part to decide a contribution rate of the product out of environmental load data produced by using facilities and apparatuses on the basis of information received by the communication part.

2. An environmental load data management device according to Claim 1, wherein
   the information about the products contains information about time utilized to manufacture the product in all operation time of the facilities and apparatuses, and
the contribution rate decision part decides the contribution rate of the product on the basis of information about time utilized to manufacture the product.

3. An environmental load data management device comprising a server device (1), terminal devices (7) to take in environmental load information and communication means (6) to connect the server device with the terminal devices, the server device (1) having function of deciding, in a supply chain constituted of facilities in which plural products of plural kinds of plural entrepreneurs are integrated physically or logically and processes including a system which controls measurement and management of the facilities, when the processes are divided temporally and spatially to be used jointly and perform processing defined for each product, product which environmental load data produced by using the processes, measured and recorded belongs to on the basis of factors concerned in environmental loads of the facilities, information representing characteristics of the products containing raw materials, component information and manufacturing method and information concerned in operation results containing environmental load information containing energy information at time that processing required for the product is performed in the facilities on the supply chain, number of processed products and processing time.

4. An environmental load data management device according to Claim 3, wherein the server device (1) has, in manufacturing processes, function of deciding product which environmental load data produced by using the manufacturing processes, measured and recorded belongs to on the basis of factors concerned in environmental loads of manufacturing facilities belonging to the processes, information representing characteristics of the products containing raw materials, component information, component list information and manufacturing method, manufacturing plan information concerned in the product containing production plan and result information produced in manufacturing processes containing manufacturing situation and manufacturing facility operation situation.

5. An environmental load data management device according to Claim 3, wherein the server device (1) has, in transportation processes, function of deciding product which environmental load data produced by using transportation processes, measured and recorded belongs to on the basis of factors concerned in environmental loads of transportation facilities belonging to the processes, transportation plan information concerned in the products containing transportation plan and result information produced in transportation processes containing transportation situation and transportation facility operation situation.

6. An environmental load data management device according to Claim 3, wherein the server device (1) has, in sale processes, function of deciding product which environmental load data produced by using sale processes, measured and recorded belongs to on the basis of factors concerned in environmental loads of sale facilities belonging to the processes, sale plan information concerned in the products containing sale plan and shop operation plan and result information produced in sale processes containing sale situation and sale facility operation situation.

7. An environmental load data management device according to Claim 3, wherein the server device (1) has, in maintenance processes, function of deciding product which environmental load data produced by using maintenance processes, measured and recorded belongs to on the basis of factors concerned in environmental loads of maintenance facilities belonging to the processes, maintenance plan information concerned in the products containing maintenance plan and result information produced in maintenance processes containing maintenance situation and maintenance facility operation situation.

8. An environmental load data management device according to Claim 3, wherein the server device (I) has, in disposal/regeneration processes, function of deciding product which environmental load data produced by using disposal/regeneration processes, measured and recorded belongs to on the basis of factors concerned in environmental loads of disposal/regeneration facilities belonging to the processes, disposal/regeneration plan information concerned in the products containing disposal/regeneration plan and result information produced in disposal/regeneration processes containing disposal/regeneration situation and disposal/regeneration facility operation situation.

9. An environmental load data management device according to Claim 5, wherein the server device (1) has function of calculating environmental load efficiency of transportation means used in transportation processes on the basis of transportation start and end time and transportation distance and reflecting the efficiency to environmental load calculation of the product.

10. An environmental load data management device according to any one of Claims 3 to 9, comprising function of capable of confirming and verifying contents obtained and circumstances of estimation about information used to decide the product which environmental load produced and measured belongs to by a third party in future.

# FIG. 1

## FIG. 2

20

| FUNCTION LIBRARY | ~21 |

COMMON PROCESSING FUNCTION — 24

COMMON DATA — 25

| RELATED FACILITY INF | ~22 |

| COMMON BASIC INF | ~23 |

USER INHERENT PROCESSING FUNCTION AND INHERENT DATA (MUTUAL SCREENING) — 26-1, 27-1
INDIVIDUAL OUTPUT — 28-1

USER INHERENT PROCESSING FUNCTION AND INHERENT DATA (MUTUAL SCREENING) — 26-2, 27-2
INDIVIDUAL OUTPUT — 28-2

USER INHERENT PROCESSING FUNCTION AND INHERENT DATA (MUTUAL SCREENING) — 26-3, 27-3
INDIVIDUAL OUTPUT — 28-3

USER INHERENT PROCESSING FUNCTION AND INHERENT DATA (MUTUAL SCREENING) — 26-n, 27-n
INDIVIDUAL OUTPUT — 28-n

REAL PROCESS INF REAL-TIME COLLECTION — 29

| 13 | 14 | 15 | 16 |
| RDB PACKAGE | NETWORK MNG PACKAGE | WEB SERVICE PROCESSING SW | SYSTEM MNG SW |

OS (WINDOWS, UNIX)

11  12

EP 2 458 542 A1

# FIG. 3

# FIG. 4

EP 2 458 542 A1

# FIG. 5

COMMON INF GROUP — 120

PRODUCT INHERENT INF — 122-α, 122-β, 122-γ

PRODUCTION PLAN — 123-α, 123-β, 123-γ

UNIT ENV LOAD CALCULATION PROCESSING — 125

ENV LOAD INF — 111-α, 111-β, 111-γ

EVIDENCE INF — 112-α, 112-β, 112-γ

PRODUCTION INF — 124-α

PRODUCTION INF — 124-β

PRODUCTION INF — 124-γ

121-α, 121-β, 121-γ — 102

EP 2 458 542 A1

# FIG. 6

130 **FACILITY FACTORS (RATED POWER)**

131 **FACILITY OPERATION SITUATION**

132 **USE AMOUNT OF SERVICES (ELECTRICITY, GAS, WATER SERVICE), INTEGRATED VALUE AND TREND OF INSTANTANEOUS VALUE**

133 **INDIVIDUAL PRODUCT IDENTIFICATION INF (NON-CONTACT TAG)**

135 — ① CLASSIFICATION USING TIME STAMP START TIME AND END TIME ② CLASSIFICATION USING INDIVIDUAL PRODUCT IDENTIFICATION INF ③ CLASSIFICATION USING PRODUCTION PLAN AND OPERATION PLAN

INF ISOLATION AMONG ENTREPRENEURS

140 LOAD DESIGN INF CLASSIFIED BY PRODUCT

142 PRODUCTION PLAN OPERATION PLAN

136 — CALCULATE PROCESSING TIME (PROCESSING TIME = END TIME - START TIME)

143 PRODUCTION RESULT VALUE (NUMBER OF FINISHED PRODUCTS)

137 — CALCULATE SERVICE AMOUNT CONSUMED WITHIN PROCESSING TIME SEPARATE INTO CONSUMPTION AMOUNT FOR EACH KIND OF PRODUCT

141 INPUTTED COMPONENT ENV LOAD AMOUNT

138 — INCREMENT OF ENV LOAD PER PRODUCT UNIT

145

139 — PRODUCT UNIT ENV LOAD AMOUNT

134a

144 — ENV LOAD OPERATION PARAMETERS AND ITS GROUP

EP 2 458 542 A1

# FIG. 7

FACILITY 105-a

PRODUCT α          PRODUCT β          PRODUCT γ

0   1   2   3   4   5   6   7   8   9   10   11   12   13   14   15
150-aα   150-a1      150aβ   150-a2   150aγ      150-a3

FACILITY 105-b

PRODUCT α          PRODUCT β          PRODUCT γ

0   1   2   3   4   5   6   7   8   9   10   11   12   13   14   15
150-b1            150-bα   150-b2   150bβ   150-b3
                                                150bγ

FACILITY 105-c

PRODUCT α          PRODUCT β          PRODUCT γ

0   1   2   3   4   5   6   7   8   9   10   11   12   13   14   15
150-c1   150-cα   150-c2      150cβ   150-c3   150cγ   150-c4

FIG. 8

# FIG. 9

BASIC INF AND VEHICLE INHERENT ENV LOAD — 221

ROUTE MAP
(DISTANCE BETWEEN
BUSINESS PLACES) — 222

INVOICE INF
(NUMBER, WEIGHT
AND GROSS WEIGHT) — 223

PRODUCT-CLASSIFIED
TRANSPORTATION ENV LOAD
CALCULATION — 226

ENV LOAD
AMOUNT

212-α
212-β
212-γ

GROUNDED
INF

213-α
213-β
213-γ

211-x,y
DISTANCE COVERED
CONSUMED FUEL

ARRIVAL TIME
DEPARTURE TIME

210-a
210-b

210-c

VEHICLE
BASE — 224

BUSINESS
PLACE — 225-a

BUSINESS
PLACE — 225-b

BUSINESS
PLACE — 225-c

227-α  227-γ
227-β — 202

MUTUAL INF
SCREENING AMONG
ENTREPRENEURS

EP 2 458 542 A1

20

# FIG. 10

Europäisches
Patentamt

European
Patent Office

Office européen
des brevets

# EUROPEAN SEARCH REPORT

**Application Number**

EP 11 17 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-10 | INV. G06Q10/06 TECHNICAL FIELDS SEARCHED (IPC) G06Q |

The present search report has been drawn up for all claims

| Place of search | Date of completion of the search | Examiner |
|---|---|---|
| The Hague | 24 February 2012 | Berlea, Alexandru |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006195916 A